# EUROPEAN PATENT SPECIFICATION

(11) **EP 4 209 144 B1**
(45) Date of publication and mention of the grant of the patent: **07.05.2025**
(21) Application number: 23158732.0
(22) Date of filing: 26.06.2020
(51) Int. Cl.: A43B 1/02, A43B 23/02, A43D 3/02, A43D 3/04, A43D 3/14, B33Y 80/00, A43D 1/02

(54) **LEISTEN, VERFAHREN ZUR HERSTELLUNG EINES LEISTEN UND VERFAHREN ZUR HERSTELLUNG EINES SCHUHOBERTEILS**
LAST, METHOD FOR PRODUCING LAST, AND METHOD FOR PRODUCING SHOE UPPER
FORME, PROCÉDÉ DE PRODUCTION DE FORME ET PROCÉDÉ DE FABRICATION DE TIGE DE CHAUSSURE

(30) Priority: 18.10.2019 JP 2019191353; 14.05.2020 JP 2020084988
(43) Date of publication of application: 12.07.2023
(62) Divisional of application: 20182732.6
(73) Proprietor: ASICS Corporation, Kobe-shi Hyogo 650-8555 (JP)
(72) Inventor: BESSHO, Ayu, Kobe-shi, Hyogo, 650-8555 (JP); ABE, Satoru, Kobe-shi, Hyogo, 650-8555 (JP); TANIGUCHI, Norihiko, Kobe-shi, Hyogo, 650-8555 (JP); KOZUKA, Yuya, Kobe-shi, Hyogo, 650-8555 (JP)
(74) Representative: Stolmár & Partner Patentanwälte PartG mbB

(56) References cited:
- US-A- 118 663
- US-A- 2 658 004

## Description

### FIELD OF THE INVENTION

The present invention relates to a last for shaping a shoe upper, a method for producing the last, and a method for producing the shoe upper.

### BACKGROUND OF THE INVENTION

In producing custom-made shoes tailored to a user's feet, lasts are exclusive for the user. Thus, after shoe uppers are shaped using lasts to produce shoes, the lasts are no longer used unless stored for future use.

US 2018/0014609 A discloses that footwear is produced in a portable housing. US 2016/0206049 A discloses a last pre-form that is composed of a shape memory polymer and thereby re-shapeable. CN 109732913 A discloses that a last is formed by 3D printing. US 1550232 B discloses a last including paper pulp thereinside. US 118663 A discloses a hollow-shell last made of plastic such as paper pulp.

However, none of the abovementioned prior art documents specifically and explicitly discloses recycling of lasts that are no longer used.

### SUMMARY OF THE INVENTION

It is therefore an object of the present invention to provide a recyclable last, a method of producing the last, and a method of producing a shoe upper.

The invention relates to a last for shaping a shoe upper as specified in appended independent claims 1 and 2, to a method for producing a last for shaping a shoe upper as specified in appended independent claim 6, and to a method for producing a shoe upper as specified in appended independent claim 8. Additional embodiments of the invention are disclosed in the dependent claims

### BRIEF DESCRIPTION OF DRAWINGS

Fig. 1A shows a state where an image of a user's foot is being captured to obtain the user's foot shape data for a last according to one embodiment of the present invention.
Fig. 1B is a perspective view of the last (not according to the invention).
Fig. 1C shows a state where the last is dissolved to be a dissolved material.
Fig. 2 shows a state where the last (not according to the invention) is being formed by a 3D printer.
Fig. 3A is a longitudinal cross-sectional view showing a central part and a peripheral part of the last (not according to the invention).
Fig. 3B is a longitudinal cross-sectional view of an essential part showing a state where an outer periphery of a body of the last (not according to the invention) is covered with a protective part.
Fig. 4 is a side view showing a state where an unshaped upper is placed on the last and subjected to steam-heating in a heating box.
Fig. 5A is a perspective view showing a state where a forming mold is being formed by cutting in the case where the last (not according to the invention) is formed with the forming mold.
Fig. 5B is a perspective view of the forming mold (not according to the invention).
Fig. 5C is a perspective view showing the state where the last (not according to the invention) is being formed with the forming mold.
Fig. 6 is a perspective view showing a last according to another embodiment of the present invention.
Fig. 7 is a perspective view showing a last according to still another embodiment of the present invention.
Fig. 8 is a perspective view showing a last according to still another embodiment of the present invention.
Fig. 9 is a perspective view showing a last according to still another embodiment of the present invention.

### DETAILED DESCRIPTION OF EMBODIMENTS

An embodiment not forming part of the present invention will be exemplified with reference to the drawings. Hereinafter, regarding the term representing the direction "inward and outward direction", the inward direction is a direction toward a foot of a shoe wearer, and the outward direction is a direction toward the outside of the shoe. Further, when a description is given below on a shoe upper 2 before and after being shaped, the shoe upper 2 before being shaped can be referred to as an unshaped upper 2A while the shoe upper 2 after being shaped can be referred to as a shaped upper 2B for separate identification of the respective states.

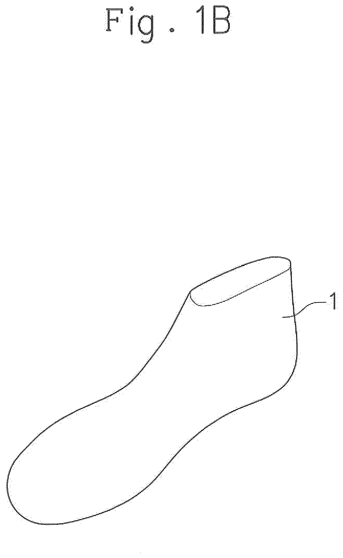

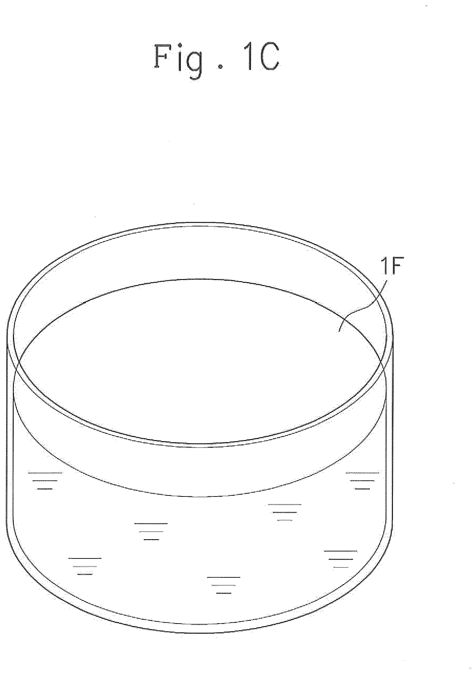

A last (shoe last) 1 of this embodiment is mainly not a last for shoes for mass production, but a custom-made last 1 tailored to a user's foot F. However, the present invention does not intend to completely deny its application to a last for shoes for mass production, but can be applicable thereto. The last 1 can be produced at a shoe retailer, or can be produced at a factory located away from the retailer by transmission and reception of 3D printing data and data on a user's foot using a communication device, as will be described later. The last 1 of this embodiment has at least an outer peripheral portion (i.e., a portion coming into contact with the shoe upper 2 when the shoe upper 2 is shaped) composed of a plastic material. The "plastic material" herein means a material that is reversibly transformed between a solid state where the material has a certain shape (see the shape of the last 1 shown in Fig. 1B (not according to the invention) when the shoe upper 2 is shaped by placing a material of the shoe upper 2 (i.e., an unshaped upper 2A) on the last 1 followed by heating or the like for shaping, and a plasticized state where the material has fluidity (see Fig. 1C). Any material that is irreversibly transformed is excluded from examples of the "plastic material". The "fluidity" means a property of liquid (or a material similar to liquid), the property allowing the liquid or the material similar to liquid to freely change its form (outer shape). The shoe upper 2 is, for example, formed of fabric, and in this embodiment formed of fabric composed of a heat-shrinkable fiber sheet.

The plastic material in this embodiment includes a solid content aggregate in which a plurality of solid contents are aggregated, and a shaping material mixed in the solid content aggregate and used for solidifying the solid content aggregate into the certain shape. In this embodiment, a pulp material (i.e., pulp pieces formed into particles or fibers that each are smaller than the last 1 as a whole) is used as the solid contents. That is, the solid content aggregate in this embodiment is a pulp aggregate. This configuration allows the last 1 to be formed of the pulp material, which is a general paper material, and thus to be formed of a readily available material.

The shaping material is dissolved from the solid state to thereby allow the plastic material to have fluidity. The dissolution occurs, for example, by adding a different material (water in this embodiment) to the shaping material, by heating the shaping material, or by irradiating the shaping material with light (e.g., ultraviolet rays). The material used as the shaping material is a water-soluble material, such as starch paste or a water-soluble resin, which exhibits fluidity when water is added thereto. The shaping material is, for example, a liquid in the initial state, and turns to a solid when left for a certain period of time in the state of being in contact with the pulp aggregate. The shaping material is thereafter caused to dissolve so that a liquid with the solid pulp aggregate mixed therein can be made. When a water-soluble shaping material is used, the shaping material is dissolved in water and thereby plasticized; thus, it is advantageous that no special chemical or apparatus is required for dissolution.

A mixing ratio between the pulp aggregate and the shaping material can be determined in consideration, for example, of hardness required when the outer peripheral portion of the last 1 is used (i.e., before and after the shoe upper 2 is shaped), the roughness of the surface of the last 1, atmospheric humidity when the last 1 is used, and a period of time required for the dissolution.

The last 1 thus configured can be transformed from the solid state to the plasticized state after the shoe upper 2 is shaped, and thereafter transformed back to the solid state. This transformation occurs reversibly. Thus, the last 1 is recyclable.

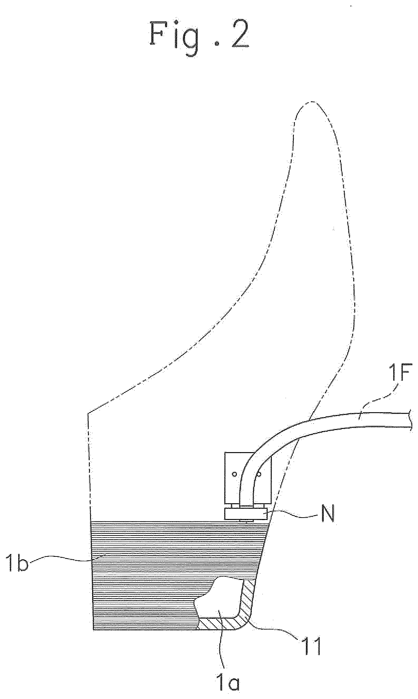

The last 1 (not according to the invention) is formed of the pulp aggregate layered in the inward and outward direction. The last 1 can be multi-layered or single-layered. The last 1, which can be shaped by the layering, can be formed without the use of a forming mold. Thus, the last 1 can be, for example, shaped using a 3D printer as shown in Fig. 2 (not according to the invention).

The last 1 may be solid, but is preferably hollow inside thereof (see the partial cross section in Fig. 2 (not according to the invention). In the case where the last 1 is formed to be hollow, a body 11 (not according to the invention) that includes the plastic material is formed to surround an internal space 1a, which corresponds to a hollow portion of the last 1. The last 1 formed to be hollow can still ensure the strength by allowing the body 11 to have a certain thickness, and thus has no functional problem. The last 1 formed to be hollow eliminates the necessity to arrange a material in the center portion thereof, and can thus save the material. This configuration can save the time required for forming the last 1. Further, this configuration can save the weight of the last 1, and therefore allows the last 1 to be easily handled. As described above, this configuration has various advantages.

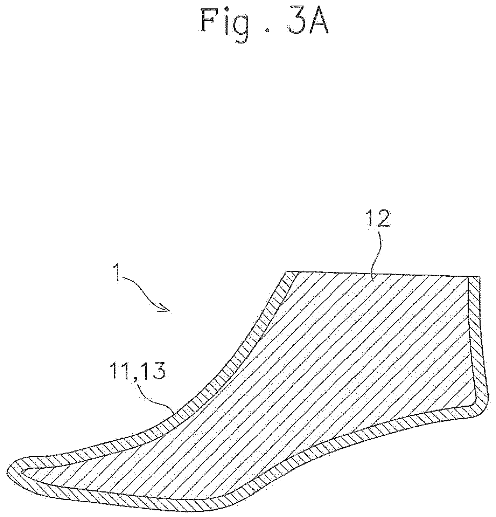

As shown in Fig. 3A (not according to the invention), the last 1 can include a central part 12 and a peripheral part 13. The central part 12 is formed in advance as a core member of the last 1, and is constantly held in a solid state. The central part 12 may be solid or hollow. The central part 12 formed to be hollow can save the weight of the last 1. The peripheral part 13 is formed on an outer peripheral portion of the central part 12. The peripheral part 13 is composed of the plastic material. That is, in this configuration, the central part 12 is positioned in the internal space 1a in the aforementioned configuration. This configuration can save the time required for forming the last 1, similar to the aforementioned configuration. This configuration can reduce the amount of the plastic material used for forming the last 1 as compared with the configuration in which the last 1 is solid and entirely formed in a uniform manner. In the case where shoes are produced at a factory, use of the central part 12 as a core material allows only the central part 12, which is slightly smaller than the last 1, to be stored in the factory for a long period of time. Thus, the number of central parts 12 stored per specific space can increase as compared with the case where the lasts 1 are entirely kept, and the storage space can be thereby saved. Even when the lasts 1 of different sizes are required, their central parts 12 can be made to have the same shape (size) so that the necessity to store the lasts 1 by size is eliminated.

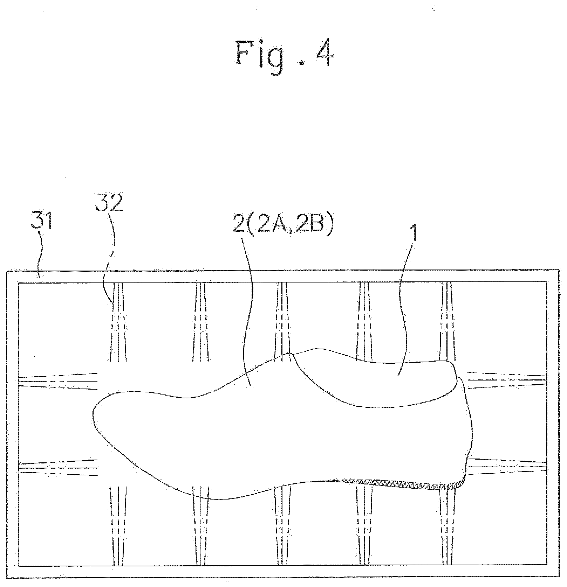

In the case where the last 1 includes the central part 12, the central part 12 can be formed of a material of higher heat conductivity than that of the peripheral part 13. For example, the central part 12 can be formed of metal (e.g., an aluminum alloy). This configuration causes the central part 12 of the last 1 to be heated when the shoe upper 2 is heated for shaping (see Fig. 4), and thereby allows the shoe upper 2 to be heated also from the side of the central part 12 (that is, the unshaped upper 2A is to be heated from both inside and outside). This configuration can thus shorten the heating time compared to the case where heating is performed only from outside, and allows the shoe upper 2 to be shaped efficiently (i.e., within a short time).

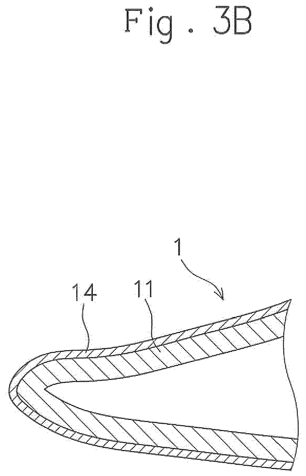

As shown in Fig. 3B (not according to the invention), the last 1 can include the body 11, and the protective part 14 having a layer shape or a film shape and covering the outer periphery (outer surface) of the body 11. As aforementioned, the body 11 corresponds to: a portion surrounding the internal space 1a in the case where the last 1 is hollow; the entire last 1 (except the protective part 14) in the case where the last 1 is solid; and the peripheral part 13 in the case where the last 1 includes the central part 12 and the peripheral part 13 (see Fig. 3A). With this configuration, the body 11 can be protected from damage by the protective part 14. The protective part 14 can be configured to allow the last 1 to be resistant to heat or ultraviolet rays. Further, the protective part 14 can be configured to be removed from the body 11. To allow the protective part 14 to be removed, for example, the protective part 14 is attached to the body 11 using adhesive configured to be removable after being attached, or the protective part 14 composed of a material having small adhesiveness to the body 11 is formed. This configuration allows the protective part 14 when attached to the last 1 to protect the body 11, and at the same time allows the protective part 14 when peeled off the last 1 to make the body 11 easily recyclable.

Examples of the protective part 14 include a metal film (e.g., aluminum film), a ultraviolet curing resin that is applied and cured (e.g., epoxy resin), a silicon resin, and rubber. The protective part 14 may be a layer composed of small particles (e.g., sand) blown on the outer periphery of the body 11. The protective part14 may be a film formed on the body 11 by soaking the body 11 in liquid resin. Further, the protective part 14 can be a film formed by blowing liquid resin onto the body 11, or by applying liquid resin to the body 11 using a brush, a roller or the like.

Next, a method for producing the last 1 will be described (not according to the invention). The last 1 is formed by layering the plastic material (mixture of the pulp aggregate and the shaping material) in the inward and outward direction by 3D printing. This forming is performed so that the last 1 has a hollow shape, as shown in the partial cross section in Fig. 2. In the case where the last 1 includes the central part 12 and the peripheral part 13, the portion serving as the peripheral part 13 is layered on the outer periphery of the central part 12 (see Fig. 3A - not according to the invention). Use of the 3D printing technique allows the last 1 to be easily formed without use of a forming mold. 3D printing is carried out using a 3D printer including a nozzle N as shown in Fig. 2. The mixture in the plasticized state is discharged through the nozzle N and sequentially piled up from the bottom as shown in Fig. 2 to shape the last 1. Fig. 2 shows a last 1b being shaped (not according to the invention).

In the case where the last 1 is formed by 3D printing (not according to the invention), a forming speed of the last 1b that is being shaped can be considered. The entire last 1 can be formed at a uniform speed; or for example, for the purpose of shortening the shaping time, an instep portion of the last 1, which corresponds to a portion of a shaped upper 2B that significantly affects wearing feeling of the user, can be precisely shaped at a low speed and the other portions can be coarsely shaped at a high speed. Further, the outer layer of the last 1 with which the shoe upper 2 comes into contact at the time of being shaped can be precisely shaped at a low speed and the inner layer thereof can be coarsely shaped at a high speed. Still further, the last 1 can be shaped to have the outer layer of high density and the inner layer of low density.

Before the last 1 is formed, a data acquiring step of acquiring the user's foot shape data, and a data generating step of generating 3D printing data from the user's foot shape data acquired are performed. Thereafter, a last forming step of layering the pulp aggregate based on the generated 3D printing data is performed (not according to the invention). Performing these steps enables forming the custom-made last 1 tailored to the user's foot F.

The 3D printing data is created based on the user's foot shape data, which is individually generated for each of a plurality of users. The 3D printing data thus generated allows the shoe upper 2 to be finely customized for each user.

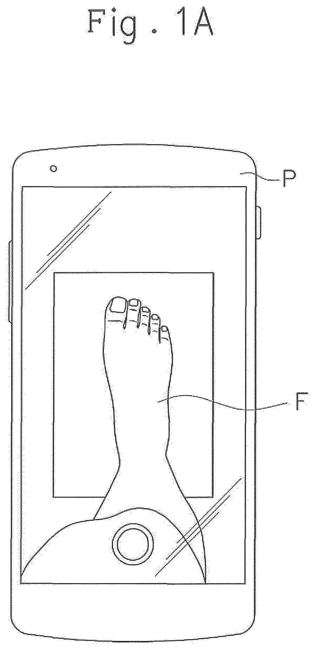

The user's foot shape data refers to, for example, measurement data of each part of the user's foot F generated from image data obtained by capturing an image of the user's foot F as shown in Fig. 1A. Thus, the user's foot shape data can be easily generated using, for example, a digital camera or a smartphone P (see Fig. 1A). In the case, for example, where the smartphone P is used, the foot shape data can be generated based on the image data by software that is installed in advance in the smartphone P. The foot shape data can also be created by calculation using both the captured image data and data owned by a shoemaker in their server.

The image data can be acquired at the user's home or at a retailer (dealer) the user visits. In this case, the image data is transmitted to the server of a shoemaker and the foot shape data is generated at a factory of the shoemaker, so that the lasts 1 and shoes conforming thereto can be subsequently produced at the factory. It is also possible to acquire the image data at a retailer and produce the lasts 1 and shoes conforming thereto at the retailer. It is of course possible to produce the lasts 1 and shoes conforming thereto respectively at different places. The retailer is not limited to a fixed store but may be a mobile store using a car or a trailer.

A dissolving step is performed when the last 1 is no longer required after being used for shaping the shoe upper 2. In the dissolving step, the last 1 after being used is dissolved and fluidized to obtain a dissolved material 1F (see Fig. 1C). Fig. 1C shows the state where the dissolved material 1F is placed in a container. The shape of the container for retaining the dissolved material 1F therein is no particularly limited. The dissolved material 1F is adjusted to have such fluidity as to be capable of being discharged to the outside through the nozzle N of the 3D printer. In the case where the last 1 includes a water-soluble shaping material, the last 1 after being used (i.e., after being used for shaping the shoe upper 2) is fluidized by adding water thereto. The dissolved material 1F in this case is composed of the pulp material as a dispersoid that is dispersed in water as a dispersion medium. The water constituting the dissolved material 1F includes the shaping material (e.g., starch paste) dissolved therein. The shaping material is additionally dissolved in the dissolved material 1F as required. Further, a curing accelerator for accelerating curing after discharged through the nozzle N can be added to the dissolved material 1F. To prevent the pulp material from being deposited in the container, a chemical can be added to the dissolved material 1F, or the dissolved material 1F can be stirred in the container. The dissolving step thus performed allows the solid content aggregate (pulp aggregate) to turn back to the plasticized state, and enables 3D printing using the aggregate in the plasticized state. The last 1 after being used can be thus recycled as a last 1 for another user.

To carry out the dissolving step within a short period of time, hot water can be added to the last 1 after being used. Further, a parting line can be in advance formed on the last 1 at the time of shaping the last 1. Still further, a mechanical device such as a cutter (e.g. shredder) or a device for crushing the aggregates or the like of the last 1 can be used before or after adding cold or hot water to promote dissolution by the cold or hot water.

Next, a method for producing the shoe upper 2 using the last 1 will be briefly described. For example, a material of the shoe upper 2 (i.e., the unshaped upper 2A) composed of a fiber sheet including heat-shrinkable yarns is prepared. Then, carried out are a first shaping step of placing the unshaped upper 2A on the last 1, and a second shaping step of shaping the unshaped upper 2A in conformity with the shape of the last 1 by heating to obtain the shaped upper 2B, as shown in Fig. 4. A steam heating means is used as a heating means in the second shaping step. As schematically shown in Fig. 4, for example, the unshaped upper 2A is placed in a heating box 31, and heated with high-temperature steam 32 discharged from the inner surface of the heating box 31. This steam heating allows the unshaped upper 2A to be entirely and uniformly heated. This configuration allows the unshaped upper 2A to be uniformly deformed in conformity with the shape of the last 1 to obtain the shaped upper 2B. In the second shaping step, hot-air heating, hot water heating, or the like can be used other than the steam heating. Further, the unshaped upper 2A can be heated not entirely but partially.

Performed after the second shaping step is a sole attaching step, in which the shaped upper 2B is attached to a separately prepared sole by, for example, adhesive. Other than adhesive, heat fusion bonding, for example, can be applied to perform the sole attaching step simultaneously with the second shaping step. In this case, the heat fusion bonding can be efficiently performed using the last 1 having the central part 12 formed of a material of high heat conductivity (for example, a metal such as aluminum, copper, or stainless steel). Forming a shoe tongue, trimming a wearing opening, making eyelets for passing shoelace therethrough, attaching decoration members and tags, printing a logo, and attaching an insole can be performed as appropriate, during any of the aforementioned steps or after all the steps.

Hereinafter, the configurations and operational effects according to the embodiment (not according to the invention) will be summarized. Provided in this embodiment is a last 1 for shaping a shoe upper 2, the last 1 including: at least an outer peripheral portion composed of a plastic material that is reversibly transformed between a solid state where the plastic material has a certain shape when the shoe upper 2 is shaped, and a plasticized state where the plastic material has fluidity and is thereby deformable.

This configuration allows the last 1 to be transformed from the solid state to the plasticized state after the shoe upper 2 is shaped, and transformed back to the solid state, thereby allowing the last 1 to be recyclable.

The plastic material may include a pulp aggregate in which a plurality of pulp materials are aggregated, and a shaping material for solidifying the pulp aggregate into the certain shape, and the shaping material may be configured to be dissolved from the solid state to thereby cause the plastic material to have fluidity.

This configuration allows the pulp material, which is a general paper material, to be used, and thus allows a readily available material to be used.

The shaping material can be water-soluble.

This configuration allows the shaping material to be dissolved in water, and thus eliminates the necessity of preparing special chemicals or devices for dissolution.

The last 1 can be formed of the pulp aggregate layered in an inward and outward direction with reference to a foot of a shoe wearer.

This configuration allows the last 1 to be formed by layering without a use of a forming mold, and thus to be shaped, for example, by 3D printing.

The last 1 can be hollow inside thereof.

This configuration eliminates the necessity to arrange a material in the center portion of the last 1, and can thus save the material.

The last 1 can include: a central part 12 formed in advance as a core and constantly held in the solid state; and a peripheral part 13 that is formed on an outer peripheral portion of the central part 12 and that is formed of the plastic material.

This configuration can shorten the time required for forming the last 1, and can reduce the amount of the plastic material used, as compared with the configuration in which the last 1 is entirely uniformly formed.

The central part 12 may be formed of a material having a higher heat conductivity than that of the peripheral part 13.

This configuration allows the shoe upper 2 to be heated also from the central part 12 side at the time of shaping the shoe upper 2 by heating, and thus allows the shoe upper 2 to be efficiently shaped.

The last 1 can include: a body 11 including the plastic material; and a protective part 14 covering an outer periphery of the body 11.

This configuration allows the protective part 14 to protect the body 11.

The protective part 14 may be capable of being removed from the body 11.

This configuration allows the protective part 14 to be removed from the last 1, and thus allows the body 11 to be easily recyclable.

Provided in this embodiment is a method for producing a last 1 for shaping a shoe upper 2 (not according to the invention), the method including: forming the last 1 by layering a pulp aggregate in which a plurality of pulp materials are aggregated, in an inward and outward direction with reference to a foot of a shoe wearer.

The production method thus configured allows the last 1 to be easily formed without a use of a forming mold.

The method for producing the last 1 can include forming the last 1 to be hollow by 3D printing.

The production method thus configured can shorten the time required for forming the last 1, and can save the material.

The configuration of the method for producing the last 1 can be such that the last 1 includes: a central part 12 formed in advance as a core; and a peripheral part 13 formed on an outer peripheral portion of the central part 12. According to this method, a portion to be formed by 3D printing can be limited to the peripheral part 13.

The production method thus configured can shorten the time required for forming the last 1, and can reduce the amount of the plastic material used, as compared with the configuration in which the last 1 is entirely uniformly formed.

The method for producing the last 1 can include: a data acquiring step of acquiring a user's foot shape data; a data generating step of generating 3D printing data from the user's foot shape data; and a last forming step of layering the pulp aggregate based on the 3D printing data.

The production method thus configured allows the last 1 to be formed tailored to the user's foot.

The method for producing the last 1 can include creating the 3D printing data based on the user's foot shape data individually generated for each of a plurality of users.

The production method thus configured allows the shoe upper 2 to be customized for each user.

The user's foot shape data can be generated from image data obtained by capturing an image of the user's foot.

The production method thus configured allows the foot shape data to be easily generated using, for example, a digital camera or a smartphone P.

The configuration of the method for producing the last 1 can be such that the last 1 includes a water-soluble shaping material for solidifying the pulp aggregate into a certain shape, and that the method further includes a dissolving step of adding water to the last 1 after being used to fluidize the last 1.

The production method thus configured allows the last 1 after being used to be recyclable as a last 1 for another user.

Provided in the aforementioned embodiment is a method for producing a shoe upper 2, the method including: a first shaping step of placing an unshaped upper 2A on the last 1, the unshaped upper 2A composed of a fiber sheet including heat-shrinkable yarns; and a second shaping step of shaping the unshaped upper 2A in conformity with the shape of the last 1 by heating to obtain a shaped upper 2B.

The production method thus configured allows the shoe upper 2 to be produced using a recyclable last 1.

The description is merely an exemplification. The last 1, the method for producing the last 1, and the method for producing the shoe upper 2 according to the present invention are defined in the appended claims.

For example, the plastic material may be a resin. In the case where a thermoplastic resin is used as the resin, the thermoplastic resin can be transformed to a plasticized state by being heated and to a solid state by being cooled.

The aforementioned embodiment (not according to the invention) has been described by taking, for example, the case where the pulp material is used as the solid content, without limitation thereto. For example, wood pieces (e.g., wood chips), bamboo pieces, natural fiber pieces (e.g., yarn waste or cut pieces of plant fibers), resin pieces (preferably heat-resistant resin pieces), metal pieces, paper pieces (larger than the pulp material and kept in a paper form), fabric pieces, plant pieces (e.g., cut pieces of dry grasses), sand, soil, or mud can be used.

The shaping material may be any material molten by heat or dissolved in a solvent other than water.

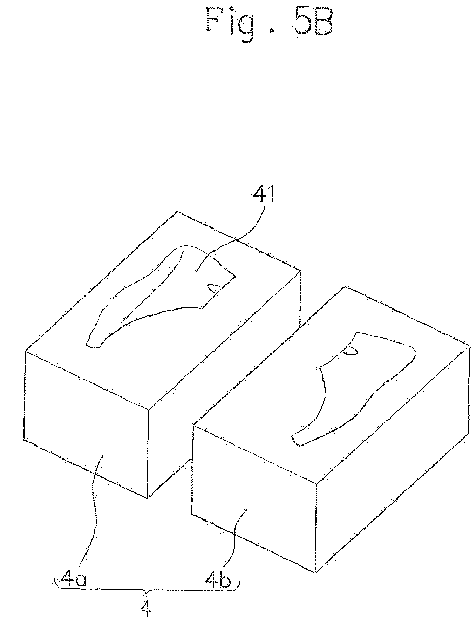

In the aforementioned embodiment (not according to the invention), a description has been given on, for example, the method for producing the last 1 in which the material is layered by 3D printing, but the last 1 may be formed by, for example, producing a forming mold 4 shown in Fig. 5B (not according to the invention) based on the foot shape data and pouring a plastic material into the forming mold 4. The forming mold 4 can be formed by 3D printing.

In this case, as shown in Fig. 5B, the forming mold 4 can be formed by combining a first forming mold 4a having a recess 41 formed to correspond to one side (for example a right side) in the width direction of the last 1 and a second forming mold 4b having the recess 41 formed to correspond to the other side (for example a left side) in the width direction of the last 1.

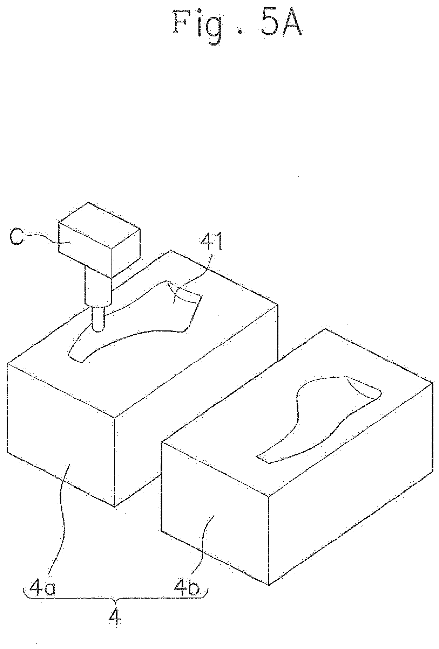

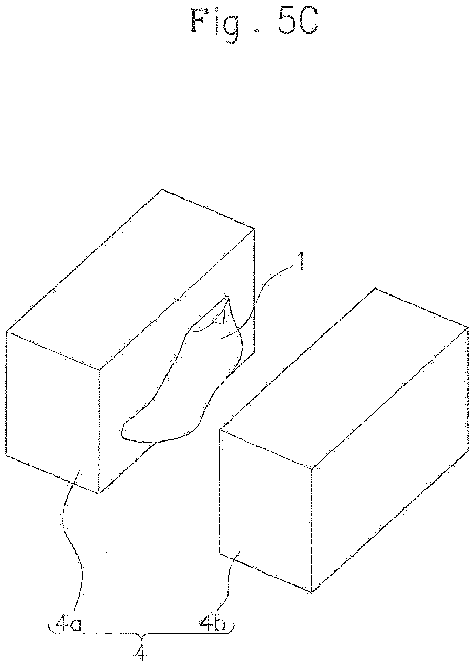

First, as shown in Fig. 5A (not according to the invention), the recess 41 is formed in each of the first forming mold 4a and the second forming mold 4b using, for example, a cutting tool C, so as to conform to the shape of the last 1 to be formed. The forming mold 4 before being cut may have a small recess formed in advance. In this case, the recess to be formed in advance may have a size corresponding to the standard size of the last 1 so that additional processing using, for example, a cutting tool C can be minimized. The completed forming mold 4 is as shown in Fig. 5B. The last 1 is formed as shown in Fig. 5C by pouring the plastic material into the recess 41 of the forming mold 4 (not according to the invention).

In pouring the plastic material into the forming mold 4, the plastic material can be poured into each of the first forming mold 4a and the second forming mold 4b to form a pair of last components (left and right components), which are subsequently joined together to form the last 1, or the plastic material can be poured into the forming mold 4 of after the first forming mold 4a and the second forming mold 4b are joined together, to form the last 1.

This forming mold 4 may also be composed of the plastic material as in the case of the last 1 so that the forming mold 4 after being used can be dissolved and recycled for a forming mold 4 for forming a last 1 having a different shape.

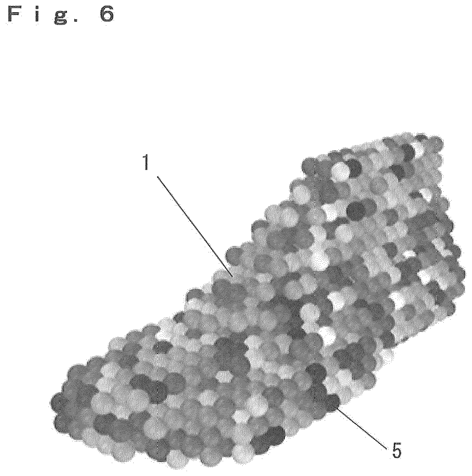

The last 1 according to the invention is formed by combining together a plurality of masses composed of a plastic material and each smaller than the last 1, such as beads 5 and 6 shown in Figs. 6 to 9. The last 1 shown in Fig. 6 is constituted by a plurality of spherical beads 5. The plurality of beads 5 are composed of, for example, polyvinyl alcohol. Water is sprayed to the plurality of beads 5 arranged into the shape of the last 1 by, for example, placing the beads 5 in a mold to allow each adjacent beads 5 abutting each other to adhere to each other. This adhesion allows the last 1 to be formed. The last 1 after being used can be molten by adding water thereto or heating.

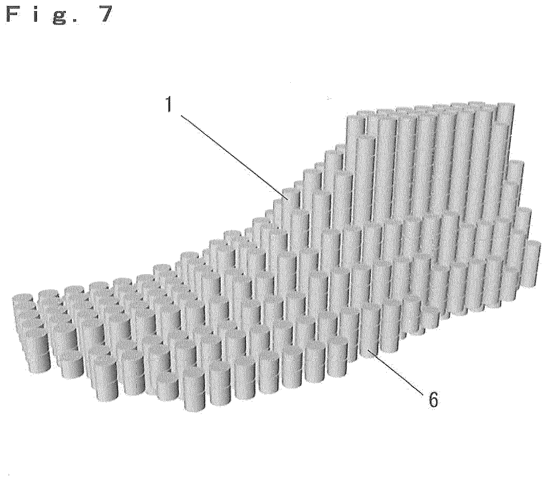

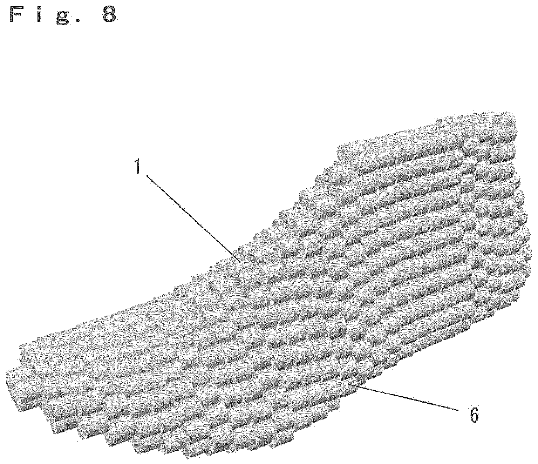

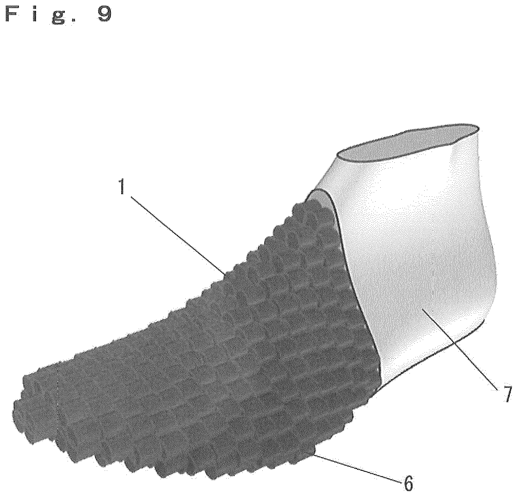

The last 1 shown in Fig. 7 and Fig. 8 is constituted by a plurality of cylindrical beads 6. The plurality of beads 6 arranged into the shape of the last 1 by, for example, placing the beads 6 in a mold are heated to allow each adjacent beads 6 abutting each other to adhere to each other. This adhesion allows the last 1 to be formed. The last 1 after being used can be molten by heat. The cylindrical beads 6 can be arranged with their axial direction oriented in the vertical direction, as shown in Fig. 7, or with their axial direction oriented in the horizontal direction, as shown in Fig. 8. Further, as shown in Fig. 9, the configuration can be such that a hind portion of the last 1 is constituted by an integrated portion 7 composed of the plastic material layered by 3D printing, as in the aforementioned embodiment, and the remaining portion is formed of an aggregate of the plurality of beads 6. Although not shown, only the hind portion of the last 1 may be formed of an aggregate of the plurality of beads 6.

The last 1 may be formed to entirely conform to the shape of the user's foot F, but may be formed to have a specific portion having a desired dimension inconsistent with the shape of the user's foot F for design or functional reasons.

The method for producing the shoe upper 2 includes the aforementioned embodiment in which the fiber sheet including heat-shrinkable yarns are heat-shrunk, but various methods such as: knitting yarns to form fabric surrounding the last 1; or layering a material using a 3D printer are disclosed.

## Claims

1. A last (1) for shaping a shoe upper (2), wherein the last (1) is formed of an aggregate of a plurality of masses composed of a plastic material, each smaller than the last, and adhered to each other,
wherein the plurality of masses are either a plurality of spherical beads (5) or a plurality of cylindrical beads (6).

2. A last (1) for shaping a shoe upper (2), wherein the last (1) comprises:
a hind portion and a remaining portion,
wherein at least the hind portion or at least the remaining portion is formed of an aggregate of a plurality of masses composed of a plastic material, each smaller than the last, and adhered to each other,
wherein the plurality of masses are a plurality of cylindrical beads (6), and
wherein the at least the hind portion or at least the remaining portion not formed of an aggregate of a plurality of masses is constituted by an integrated portion (7) composed of the plastic material layered by 3D printing.

3. The last according to claim 1 or claim 2, wherein the plurality of cylindrical beads (6) are either arranged with their axial direction oriented in a vertical direction, or arranged with their axial direction oriented in a horizontal direction.

4. The last according to any one of claims 1 to 3, wherein the plurality of masses are composed of polyvinyl alcohol and the last is meltable by adding water thereto or heating.

5. The last according to claim 2, wherein the hind portion is constituted by the integrated portion (7) composed of the plastic material layered by 3D printing.

6. A method for producing a last (1) for shaping a shoe upper (2) according to any of claims 1 to 5, the method comprising:
forming the last (1) by placing a plurality of spherical beads (5) or a plurality of cylindrical beads (6) composed of a plastic material in a mold to allow each adjacent beads abutting each other to adhere to each other by spraying water thereto or heating.

7. The method for producing a last according to claim 6, wherein the plastic material is polyvinyl alcohol.

8. A method for producing a shoe upper (2), the method comprising
providing a last (1) according to any one of claims 1 to 5,
a first shaping step of placing an unshaped upper (2A) on the last (1), the unshaped upper composed of a fiber sheet comprising heat-shrinkable yarns; and
a second shaping step of shaping the unshaped upper (2A) in conformity with the shape of the last by heating to obtain a shaped upper (2B).

## Patentansprüche

1. Leisten (1) zum Formen eines Schuhoberteils (2), wobei der Leisten (1) aus einem Aggregat aus einer Vielzahl von Massen gebildet ist, die aus einem Kunststoffmaterial bestehen, von denen jede kleiner als der Leisten ist und die aneinander haften,
wobei die Vielzahl von Massen entweder eine Vielzahl von kugelförmigen Perlen (5) oder eine Vielzahl von zylindrischen Perlen (6) ist.

2. Leisten (1) zum Formen eines Schuhoberteils (2), wobei der Leisten (1) umfasst:
einen hinteren Teil und einen verbleibenden Teil,
wobei zumindest der hintere Teil oder zumindest der verbleibende Teil aus einem Aggregat aus einer Vielzahl von Massen gebildet ist, die aus einem Kunststoffmaterial bestehen, von denen jede kleiner als die letzte ist und die aneinander haften,
wobei die Vielzahl von Massen eine Vielzahl von zylindrischen Perlen (6) ist, und
wobei zumindest der hintere Teil oder zumindest der verbleibende Teil, der nicht aus einem Aggregat aus einer Vielzahl von Massen gebildet ist, durch einen integrierten Teil (7) gebildet ist, der aus dem durch 3D-Druck geschichteten Kunststoffmaterial besteht.

3. Leisten nach Anspruch 1 oder Anspruch 2, wobei die Vielzahl von zylindrischen Perlen (6) entweder mit ihrer axialen Richtung in vertikaler Richtung orientiert oder mit ihrer axialen Richtung in horizontaler Richtung orientiert angeordnet sind.

4. Leisten nach einem der Ansprüche 1 bis 3, wobei die Vielzahl von Massen aus Polyvinylalkohol bestehen und der Leisten durch Zugabe von Wasser oder Erhitzen schmelzbar ist.

5. Leisten nach Anspruch 2, wobei der hintere Teil durch den integrierten Teil (7) gebildet wird, der aus dem durch 3D-Druck geschichteten Kunststoffmaterial besteht.

6. Verfahren zur Herstellung eines Leistens (1) zur Formung eines Schuhoberteils (2) nach einem der Ansprüche 1 bis 5, wobei das Verfahren umfasst:
Bilden des Leistens (1) durch Anordnen einer Vielzahl von kugelförmigen Perlen (5) oder einer Vielzahl von zylindrischen Perlen (6), die aus einem Kunststoffmaterial bestehen, in einer Form, um zu ermöglichen, dass alle benachbarten Perlen, die aneinander stoßen, aneinander haftet, indem Wasser darauf gesprüht oder erhitzt wird.

7. Verfahren zur Herstellung eines Leistens nach Anspruch 6, wobei das Kunststoffmaterial Polyvinylalkohol ist.

8. Verfahren zur Herstellung eines Schuhoberteils (2), wobei das Verfahren umfasst:
Bereitstellen eines Leistens (1) nach einem der Ansprüche 1 bis 5,
einen ersten Formgebungsschritt des Auflegens eines ungeformten Oberteils (2A) auf den Leisten (1), wobei das ungeformte Oberteil aus einer Faserschicht besteht, die wärmeschrumpfbare Garne umfasst; und
einen zweiten Formgebungsschritt, bei dem das ungeformte Oberteil (2A) in Übereinstimmung mit der Form des Leistens durch Erhitzen geformt wird, um ein geformtes Oberteil (2B) zu erhalten.

## Revendications

1. Forme (1) pour façonner une tige de chaussure (2), dans laquelle la forme (1) est formée d'un agrégat d'une pluralité de masses composées d'une matière plastique, chacune plus petite que la forme, et adhérant l'une à l'autre,
dans laquelle la pluralité de masses est soit une pluralité de perles sphériques (5), soit une pluralité de perles cylindriques (6).

2. Forme (1) pour façonner une tige de chaussure (2), dans laquelle la forme (1) comprend :
une partie arrière et une partie restante,
dans laquelle au moins la partie arrière ou au moins la partie restante est formée d'un agrégat d'une pluralité de masses composées d'une matière plastique, chacune plus petite que la forme, et adhérant l'une à l'autre,
dans laquelle la pluralité de masses est une pluralité de perles cylindriques (6), et
dans laquelle au moins la partie arrière ou au moins la partie restante qui n'est pas formée d'un agrégat d'une pluralité de masses est constituée d'une partie intégrée (7) composée de la matière plastique stratifiée par impression 3D.

3. Forme selon la revendication 1 ou la revendication 2, dans laquelle la pluralité de perles cylindriques (6) sont soit disposées avec leur direction axiale orientée dans une direction verticale, soit disposées avec leur direction axiale orientée dans une direction horizontale.

4. Forme selon l'une quelconque des revendications 1 à 3, dans laquelle la pluralité de masses est composée d'alcool polyvinylique et la forme est fusible par adjonction d'eau ou chauffage.

5. Forme selon la revendication 2, dans laquelle la partie arrière est constituée de la partie intégrée (7) composée de la matière plastique stratifiée par impression 3D.

6. Procédé de fabrication d'une forme (1) pour le façonnage d'une tige de chaussure (2) selon l'une quelconque des revendications 1 à 5, le procédé comprenant :
la formation de la forme (1) en plaçant une pluralité de perles sphériques (5) ou une pluralité de perles cylindriques (6) composées d'une matière plastique dans un moule pour permettre à chaque perle adjacente d'adhérer l'une à l'autre en pulvérisant de l'eau ou en chauffant.

7. Procédé de fabrication d'une forme selon la revendication 6, dans lequel la matière plastique est de l'alcool polyvinylique.

8. Procédé de fabrication d'une tige de chaussure (2), comprenant la fourniture d'une forme (1) selon l'une quelconque des revendications 1 à 5,
une première étape de façonnage consistant à placer une tige non façonnée (2A) sur la forme (1), la tige non façonnée étant composée d'une feuille de fibres comprenant des fils thermorétractables ; et
une seconde étape de façonnage consistant à façonner la tige non façonnée (2A) conformément au contour de la forme en chauffant pour obtenir une tige façonnée (2B).
